# EUROPEAN PATENT SPECIFICATION

(11) **EP 2 916 157 B1**
(45) Date of publication and mention of the grant of the patent: **17.08.2016**
(21) Application number: 15156896.1
(22) Date of filing: 27.02.2015
(51) Int. Cl.: G01D 5/347, G02B 17/06, G03F 7/20, G02B 17/08, G01J 3/00, G02B 17/00, G01B 11/00

(54) **Photoelectric encoder**
Fotoelektrischer Codierer
Codeur photoélectrique

(30) Priority: 03.03.2014 JP 2014040742
(43) Date of publication of application: 09.09.2015
(73) Proprietor: Mitutoyo Corporation, Kawasaki-shi, Kanagawa 213-8533 (JP)
(72) Inventor: Ono, Kimitoshi, Kanagawa 213-8533 (JP)
(74) Representative: Gill Jennings & Every LLP

(56) References cited:
- EP-A2- 0 768 517
- EP-A2- 1 245 985
- EP-A2- 2 407 761
- WO-A2-2006/014263
- US-A1- 2006 044 528
- US-A1- 2006 044 535
- US-A1- 2008 252 871
- US-A1- 2013 050 667

## Description

### BACKGROUND OF THE INVENTION

### 1. Field of the Invention

The present invention relates to a photoelectric encoder including an imaging optical system.

### 2. Description of the Related Art

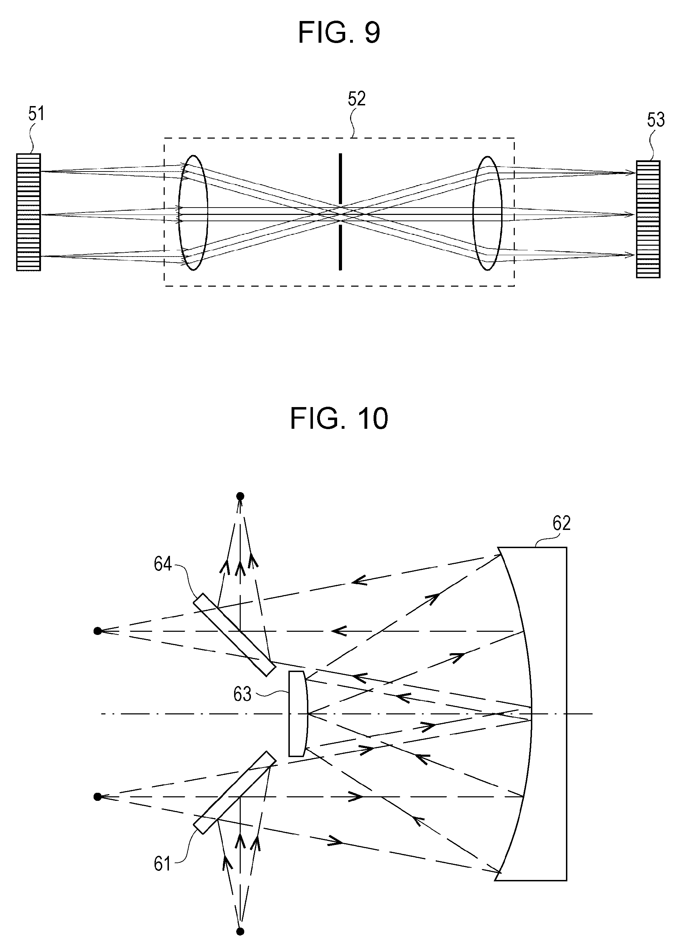

Photoelectric encoders in which an imaging optical system is disposed between a scale and a light receiver have been realized (see, for example, Japanese Unexamined Patent Application Publication No. 2006-284563). An example of such a photoelectric encoder is a both-side telecentric optical system including lenses as illustrated in Fig. 9. The both-side telecentric optical system is advantageous in that distortion is relatively small and the image magnification does not vary in accordance with variation in the distance between a scale 51 and an optical system 52 and variation in the distance between a light receiver 53 and the optical system 52.

In such a both-side telecentric optical system including the lenses, the lens that faces the scale needs to have a size that is larger than or equivalent to the size of the required effective field of view. When the entire length of the optical system is to be reduced without changing the effective field of view to satisfy the demand for reduction in size, it is necessary to reduce the focal length of the lens. To achieve reduction in size, it is preferable not to increase the number of lenses. The smallest number of lenses is two, as in the structure illustrated in Fig. 9. However, when the focal length is reduced without increasing the number of lenses, the curvature of the lens surface is increased (that is, the radius of curvature is reduced) by a large amount. As a result, in a region distant from an optical axis in the field of view, the optical performance will be degraded (for example, various aberrations will be generated), and the amount of light will be reduced due to an increase in an angle of refraction.

An optical system called an Offner relay illustrated in Fig. 10 has been proposed as a reflective optical system that constitutes a telecentric optical system. This optical system includes two planar mirrors 61 and 64, a spherical main mirror (concave mirror) 62, and a spherical sub-mirror (convex mirror) 63 (see, for example, United States Patent No. 3748015). With the Offner relay, the overall length of the optical system can be reduced by bending an optical path with a relatively small number of components. In addition, the Offner relay includes no refracting surface, and therefore it can be expected that the reduction in the amount of light in a region distant from an optical axis in the field of view can be suppressed.

However, the Offner relay optical system described in United States Patent No. 3748015 has a problem in that since the mirror surfaces are exposed, the optical surfaces are easily contaminated. In addition, since the main mirror, the sub-mirror, and the reflecting mirrors are provided as separate components, these components are required to be assembled with high accuracy. In addition, the Offner relay optical system described in United States Patent No. 3748015 does not have an aperture in a focal plane, which is at the center of the optical system (at the reflecting position of the sub-mirror in Fig. 10), and a numerical aperture (NA) of the optical system is not specified. Therefore, a part of the incident light to be used in the imaging process cannot be restricted.

D1 = US 2008/252871 A1 (fig. 3), D2 = US 2006/044528 A1 (fig. 4), D3 = US 2006044535 A1 and D6 = EP 1245985 A2 disclose image projection systems. Document D4 = EP 0768517 A2, D5 = EP 2407761 A2, Document D7 = WO 2006014263 A2 and D8 = US 2013050667 A1 disclose optical spectrometers.

### SUMMARY OF THE INVENTION

An object of the present invention is to provide a photoelectric encoder in which a reflective both-side telecentric optical system constitutes an imaging optical system.
(1) A photoelectric encoder according to an aspect of the present invention includes a light source that emits light; a scale including bars arranged at a predetermined pitch in a length measurement direction, on which the light emitted by the light source is incident; an imaging optical system on which the light that has passed through the scale is incident and which emits the incident light as collimated light; and a light receiver that receives the light emitted by the imaging optical system such that a position of the scale in the length measurement direction can be detected. The imaging optical system constitutes a both-side telecentric optical system including a first planar reflective surface, a main mirror, which is a spherical concave mirror, a sub-mirror, which is a spherical convex mirror and has a center that coincides with a center of the main mirror, and a second planar reflective surface. A ratio of a radius Rcc of a spherical surface of the main mirror to a radius Rcx of a spherical surface of the sub-mirror is Rcc:Rcx = n:n-1, where n is an integer that is greater than or equal to 2. In the imaging optical system, the first planar reflective surface reflects the incident light, which has passed through the scale, toward the main mirror, the main mirror and the sub-mirror fold an optical path of the light from the first planar reflective surface by reflecting the light from the first planar reflective surface 2n-1 times between the main mirror and the sub-mirror, the main mirror emits the light that has been reflected 2n-1 times toward the second planar reflective surface, and the second planar reflective surface reflects the light that has been reflected 2n-1 times and emitted by the main mirror toward the light receiver.

With this structure, a photoelectric encoder in which a reflective both-side telecentric optical system constitutes an imaging optical system can be provided. Therefore, the problems of the lens system that the amount of light is reduced in a region distant from an optical axis in the field of view and the aberrations are generated can be prevented.
(2) In the present invention, light-restricting means may be provided at a position of n^{th} reflection by the main mirror and the sub-mirror, the light-restricting means regulating a part of the incident light to be used to light around an optical axis. (3) When the integer n is 2, the light-restricting means may regulate the part of the incident light to be used in accordance with a diameter of a reflective region of the sub-mirror. When the light-restricting means is provided, NA of the imaging optical system can be specified.
(4) In the present invention, the imaging optical system may have an integral structure. With such a structure, contamination of the optical surfaces can be prevented. In addition, it is not necessary to perform alignment for the optical system including a plurality of mirrors in the assembly process, and the assembly process can be facilitated.
(5) In the present invention, the main mirror and the sub-mirror may fold the optical path in an optical axis direction of the incident light. With such a structure, the size of the imaging optical system in the optical axis direction can be reduced.
(6) Alternatively, the main mirror and the sub-mirror may fold the optical path in a direction perpendicular to both an optical axis direction of the incident light and a length measurement direction. With such a structure, the size of the imaging optical system in the optical axis direction can be further reduced.
(7) A two-track photoelectric encoder according to another aspect of the present invention may include first and second photoelectric encoders, each of which is the photoelectric encoder according to the above item (6). In this case, the first planar reflective surface of the first photoelectric encoder and the second planar reflective surface of the second photoelectric encoder may at least partially overlap, and the second planar reflective surface of the first photoelectric encoder and the first planar reflective surface of the second photoelectric encoder may at least partially overlap. With such a structure, the size of the two-track photoelectric encoder system can be reduced.
(8) In the photoelectric encoder according to an aspect of the present invention, the light emitted by the light source may be collimated light. (9) In the two-track photoelectric encoder according to another aspect of the present invention, the light emitted by each of the light sources may be collimated light. With such a structure, even when the light-restricting means described in the above item (2) is not provided, NA can be specified by the light source.

### BRIEF DESCRIPTION OF THE DRAWINGS

Fig. 1 is a perspective view illustrating the structure of a photoelectric encoder according to a first embodiment of the present invention.
Fig. 2 is a schematic diagram illustrating a cross sectional view taken along an X-Z plane of an optical path in the photoelectric encoder according to the first embodiment.
Fig. 3 is a perspective view illustrating the structure of a photoelectric encoder according to a second embodiment of the present invention.
Fig. 4 is a schematic diagram illustrating a cross sectional view taken along an X-Z plane of an optical path in the photoelectric encoder according to the second embodiment.
Fig. 5 is a perspective view illustrating the structure of a photoelectric encoder according to a third embodiment of the present invention.
Fig. 6A is a schematic diagram illustrating a cross sectional view taken along an X-Z plane of an optical path in the photoelectric encoder according to the third embodiment.
Fig. 6B is a schematic diagram illustrating a cross sectional view taken along an X-Y plane of an optical path in an imaging optical element included in the photoelectric encoder according to the third embodiment.
Fig. 7 is a perspective view illustrating the structure of a photoelectric encoder according to a fourth embodiment of the present invention.
Fig. 8 is a schematic diagram illustrating a cross sectional view taken along an X-Z plane of an optical path in an imaging optical element according to a modification in the case where n = 3.
Fig. 9 illustrates an example of the structure of a photoelectric encoder including a lens array according to the related art.
Fig. 10 illustrates an example of the structure of a reflective optical system that constitutes a telecentric optical system.

### DESCRIPTION OF THE PREFERRED EMBODIMENTS

### First Embodiment

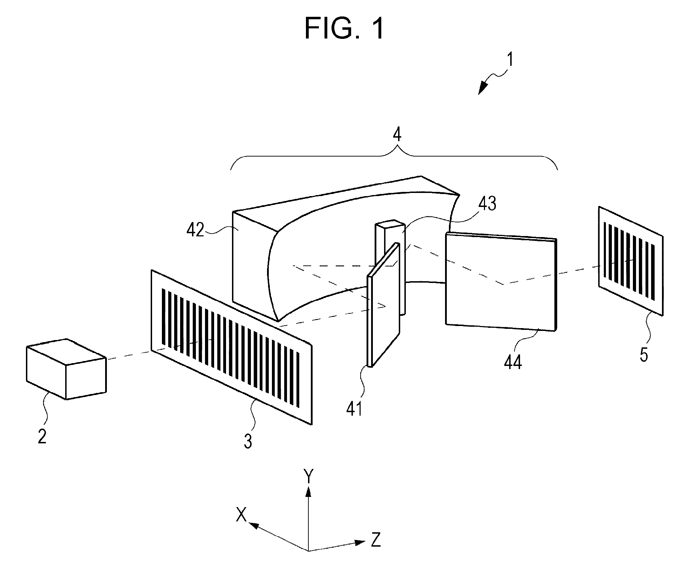

A first embodiment of the present invention will be described with reference to the drawings. Fig. 1 is a perspective view illustrating the structure of a photoelectric encoder according to the first embodiment of the present invention. In the following description, as illustrated in each figure, a direction in which bars are arranged in a scale 3 (length measurement direction) is defined as an X-axis, an optical axis direction of light emitted from a light source 2 is defined as a Z-axis, and a direction perpendicular to the X-axis and the Z-axis is defined as a Y-axis.

As illustrated in Fig. 1, the photoelectric encoder 1 includes the light source 2, the scale 3, an imaging optical system 4, and a light receiver 5. In the photoelectric encoder 1, an image of the scale 3 is projected and focused on the light receiver 5, and the position of the scale 3 in the length measurement direction is detected on the basis of the image detected by the light receiver 5.

The light source 2 emits collimated light such that chief rays of the light extend in the Z-axis direction. The light source 2 may be constructed by, for example, combining a light-emitting element, such as a light-emitting diode, and a collimator lens that collimates light emitted by the light-emitting element. The collimated light emitted from the light source 2 is incident on the scale 3. The collimated light is light in which the chief rays that contribute to image formation are parallel, and may include components in a direction different from the direction of the chief rays.

The scale 3 includes bars that are arranged at a predetermined pitch in the X-axis direction, which is the length measurement direction. The scale 3 partially blocks the collimated light from the light source 2 with the bars, so that the transmitted light has light-and-dark patterns in accordance with the bars. The collimated light that has passed through the scale 3 and has light-and-dark patterns generated by the bars is incident on the imaging optical system 4.

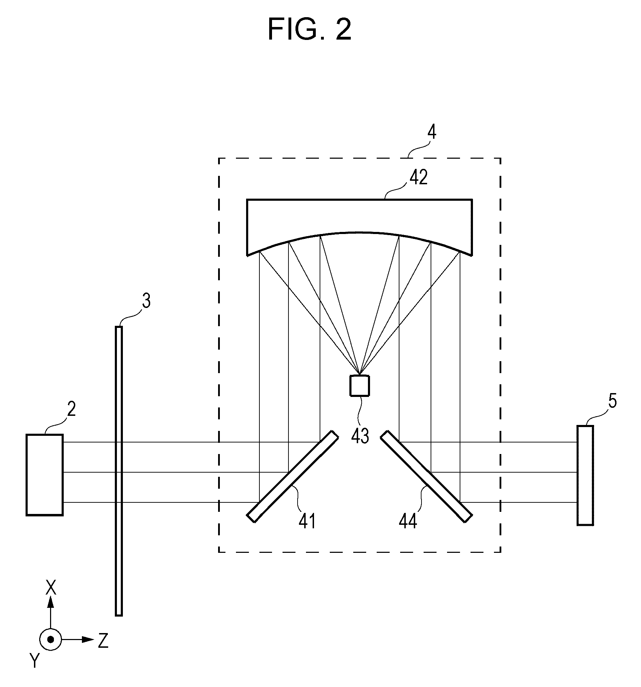

Next, the structure and optical function of the imaging optical system 4 will be described with reference to Fig. 2, which is a schematic diagram illustrating a cross sectional view of an optical path. Fig. 2 is a schematic diagram illustrating a cross sectional view taken along an X-Z plane of the optical path in the photoelectric encoder according to the first embodiment. The imaging optical system 4 corresponds to an optical system according to the present invention, and emits light incident thereon as collimated light. The imaging optical system 4 includes a first planar mirror 41, a main mirror 42, a sub-mirror 43, and a second planar mirror 44. These components form a reflective both-side telecentric optical system having a folded optical path.

More specifically, the first planar mirror 41 reflects light that has passed through the scale 3 and been incident on the first planar mirror 41 so as to bend the optical path by 90 degrees so that the chief rays of the reflected light extend in the positive X-axis direction. The main mirror 42 is a spherical concave mirror, and the sub-mirror 43 is a spherical convex mirror that has a center that coincides with the center of the main mirror 42. The ratio of the radius Rcc of the spherical surface of the main mirror 42 to the radius Rcx of the spherical surface of the sub-mirror 43 is generally Rcc:Rcx = n:n-1. In the present embodiment, the ratio is Rcc:Rcx = 2:1. The light that travels from the first planar mirror 41 in a direction parallel to the X axis is incident on the main mirror 42. The main mirror 42 reflects the incident light so that the chief rays of the reflected light extend toward the sub-mirror 43 (first reflection by the main mirror 42 and the sub-mirror 43). In the present embodiment, the sub-mirror 43 is located further in the Z-axis direction than the position of the first reflection by the main mirror 42.

Since the focal length of a spherical concave mirror is 1/2 of the radius, the incident light reflected by the main mirror 42 is concentrated on the sub-mirror 43. The light emitted from the light source 2 diverges to positions separated from the optical axis while travelling in the optical axis direction. Therefore, the light that has passed the first planar mirror 41 and the main mirror 42 reaches the spherical surface of the sub-mirror 43 in a state such that the light is spread over a certain area. To selectively reflect only a part of the light that has reached the sub-mirror 43, the part of the light being in a predetermined range around the optical axis, the sub-mirror 43 is formed in a shape corresponding to the predetermined range. In other words, the sub-mirror 43 has a function of restricting a part of the incident light to be used to light around the optical axis. This function corresponds to the function of an aperture in a telecentric optical system including the lenses illustrated in Fig. 9. The shape of the sub-mirror 43 corresponds to the shape of the aperture.

The sub-mirror 43 reflects a part of the light from the main mirror 42 toward the main mirror 42 (second reflection by the main mirror 42 and the sub-mirror 43), the part of the light being the light around the optical axis. The main mirror 42 reflects the light from the sub-mirror 43 toward the second planar mirror 44 (third reflection by the main mirror 42 and the sub-mirror 43). Thus, the main mirror 42 and the sub-mirror 43 alternately reflect the light 2n-1 times (three times in the present embodiment) to fold the optical path in the Z-axis direction. While the reflection is repeated 2n-1 times, the position at which the light is reflected is gradually shifted in the Z-axis direction. The second planar mirror 44 reflects light incident thereon, which has passed through the scale 3 and been reflected by the main mirror 42 for the second time, so as to bend the optical path by 90 degrees so that the chief rays of the reflected light extend in the positive Z-axis direction. The light reflected by the second planar mirror 44 serves as light emitted from the imaging optical system 4, and is incident on the light receiver 5.

The light receiver 5 includes, for example, a photodiode array in which a plurality of photodiodes are arranged in the X-axis direction. The light emitted from the imaging optical system 4 is incident on a light-receiving surface of the light receiver 5, so that an image of the scale 3 is formed on the light-receiving surface. The light-and-dark patterns corresponding to the bars of the scale 3 are detected by the photodiodes, so that the position of the scale 3 in the length measurement direction can be detected. More specifically, the position of the scale 3 in the length measurement direction is determined by a calculating unit (not shown) on the basis of the intensity of light detected by the photodiodes.

The imaging optical system 4 included in the photoelectric encoder 1 according to the first embodiment having the above-described structure constitutes a reflective both-side telecentric optical system. Therefore, the advantage of the both-side telecentric optical system that the image magnification does not vary in accordance with variation in the distance between the scale 3 and the imaging optical system 4 and variation in the distance between the light receiver 5 and the imaging optical system 4 can be obtained. In addition, reduction in the amount of light in a region distant from an optical axis in the field of view can be suppressed. Furthermore, a part of the incident light to be used can be restricted to light in the desired area around the optical axis in accordance with the shape of the sub-mirror 43, and a numerical aperture (NA) of the optical system can substantially be specified.

### Second Embodiment

A second embodiment of the present invention will now be described with reference to the drawings. A photoelectric encoder 1a according to the present embodiment includes an imaging optical element 4a in place of the imaging optical system 4 according to the first embodiment. The present embodiment is similar to the first embodiment except for the changes regarding the imaging optical element 4a, and descriptions of similar structures are thus omitted.

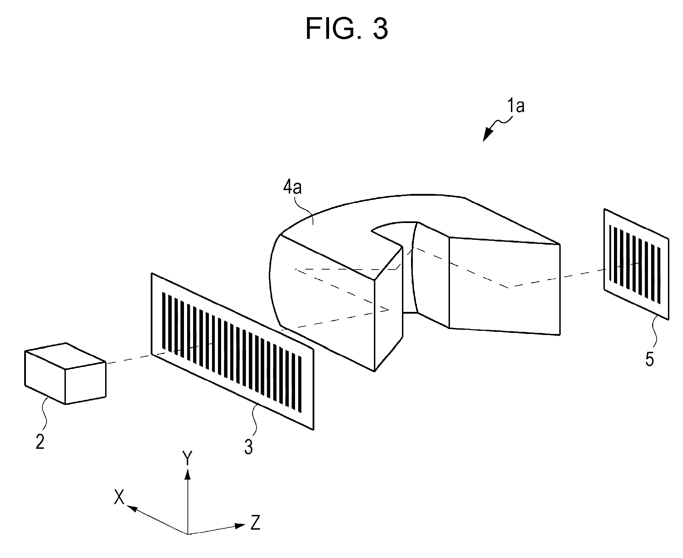

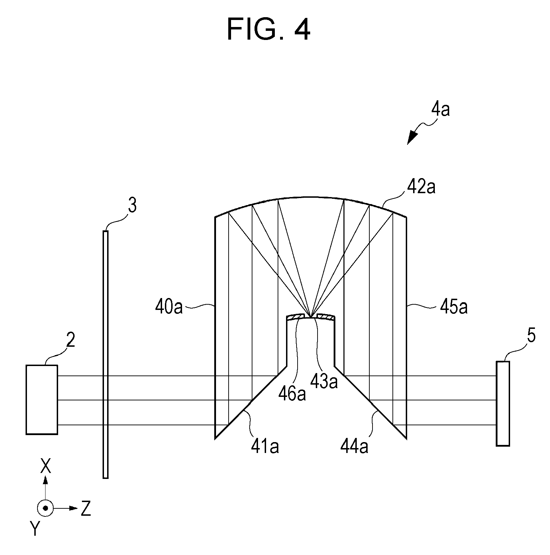

Fig. 3 is a perspective view illustrating the structure of the photoelectric encoder 1a according to the second embodiment of the present invention. Fig. 4 is a schematic diagram illustrating a cross sectional view taken along an X-Z plane of an optical path in the photoelectric encoder according to the second embodiment. The imaging optical element 4a corresponds to an optical system according to the present invention. The imaging optical element 4a is an optical element having an integral structure formed of a transparent material such as glass or plastic. The imaging optical element 4a includes an incident surface 40a, a first planar reflective surface 41a, a main mirror surface 42a, a sub-mirror surface 43a, a second planar reflective surface 44a, and an emission surface 45a. These components form a reflective both-side telecentric optical system having a folded optical path. The main mirror surface 42a and the sub-mirror surface 43a are provided by forming reflective films, and the first planar reflective surface 41a and the second planar reflective surface 44a are provided by forming reflective films or total reflection surfaces.

The imaging optical element 4a is arranged so that the incident surface 40a is perpendicular to the optical axis direction of light incident thereon. In addition, the imaging optical element 4a is arranged so that the first planar reflective surface 41a bends the optical path of the incident light by 90 degrees toward the positive X-axis direction to reflect the incident light in the positive X-axis direction. The main mirror surface 42a is a spherical concave mirror, and the sub-mirror surface 43a is a spherical convex mirror that has a center that coincides with the center of the main mirror surface 42a. The ratio of the radius Rcc of the spherical surface of the main mirror surface 42a to the radius Rcx of the spherical surface of the sub-mirror surface 43a is generally Rcc:Rcx = n:n-1. In the present embodiment, the ratio is Rcc:Rcx = 2:1. The main mirror surface 42a reflects the light from the first planar reflective surface 41a so that the chief rays of the reflected light extend toward the sub-mirror surface 43a (first reflection by the main mirror surface 42a and the sub-mirror surface 43a). In the present embodiment, the sub-mirror surface 43a is located further in the Z-axis direction than the position of the first reflection by the main mirror surface 42a.

Since the focal length of a spherical concave mirror is 1/2 of the radius, the incident light reflected by the main mirror surface 42a is concentrated on the sub-mirror surface 43a. The light emitted from the light source 2 diverges to positions separated from the optical axis while travelling in the optical axis direction. Therefore, the light that has passed the first planar reflective surface 41a and the main mirror surface 42a reaches the spherical surface of the sub-mirror surface 43a in a state such that the light is spread over a certain area. To selectively reflect only a part of the light that has reached the sub-mirror surface 43a, the part of the light being in a predetermined range around the optical axis, the sub-mirror surface 43a is formed in a shape corresponding to the predetermined range. A mask-processed region 46a, which is a portion subjected to a mask process to make the reflectance sufficiently low, is provided around the shape as necessary. In other words, the mask-processed region 46a has a function of restricting a part of the incident light to be used to light around the optical axis.

The sub-mirror surface 43a reflects a part of the light from the main mirror surface 42a toward the main mirror surface 42a (second reflection by the main mirror surface 42a and the sub-mirror surface 43a), the part of the light being the light around the optical axis. The main mirror surface 42a reflects the light from the sub-mirror surface 43a toward the second planar reflective surface 44a (third reflection by the main mirror surface 42a and the sub-mirror surface 43a). Thus, the main mirror surface 42a and the sub-mirror surface 43a alternately reflect the light 2n-1 times (three times in the present embodiment) to fold the optical path in the Z-axis direction. The second planar reflective surface 44a reflects light incident thereon, which has been reflected by the main mirror surface 42a for the second time, so as to bend the optical path by 90 degrees so that the chief rays of the reflected light extend in the positive Z-axis direction. The light reflected by the second planar reflective surface 44a is emitted through the emission surface 45a as light emitted from the imaging optical element 4a, and is incident on the light receiver 5.

In the present embodiment, the imaging optical element 4a is arranged so that the first planar reflective surface 41a reflects the incident light in the positive X-axis direction. However, as long as the incident surface 40a is perpendicular to the optical axis of the incident light, it is not necessary that the first planar reflective surface 41a reflect the incident light in the positive X-axis direction, and the imaging optical element 4a may be arranged as appropriate depending on space restrictions or other conditions.

Similar to the first embodiment, the imaging optical element 4a included in the photoelectric encoder 1a according to the second embodiment having the above-described structure constitutes a reflective both-side telecentric optical system. Therefore, the advantage of the both-side telecentric optical system that the image magnification does not vary in accordance with variation in the distance between the scale 3 and the imaging optical element 4a and variation in the distance between the light receiver 5 and the imaging optical element 4a can be obtained. In addition, reduction in the amount of light in a region distant from an optical axis in the field of view can be suppressed. Furthermore, a part of the incident light to be used can be restricted to light in the desired area around the optical axis in accordance with the shape of the reflective region of the sub-mirror surface 43a, and a numerical aperture (NA) of the optical system can substantially be specified. In addition, since the imaging optical element has an integral structure in which the reflective surfaces are not exposed, the optical surfaces are not easily contaminated. Furthermore, since the main mirror, the sub-mirror, and the planar reflective surfaces are integrated with each other, the assembly process can be facilitated.

### Third Embodiment

A third embodiment of the present invention will now be described with reference to the drawings. A photoelectric encoder 1b according to the present embodiment includes an imaging optical element 4b in place of the imaging optical element 4a according to the second embodiment. The present embodiment is similar to the second embodiment except for the changes regarding the imaging optical element 4b, and descriptions of similar structures are thus omitted.

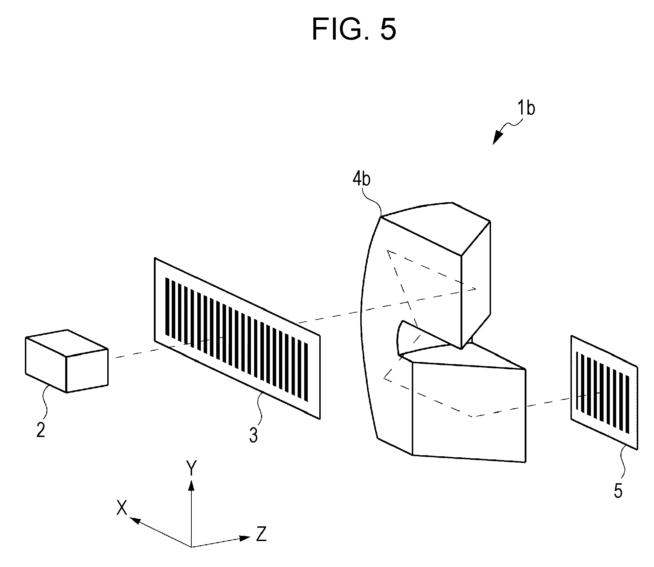

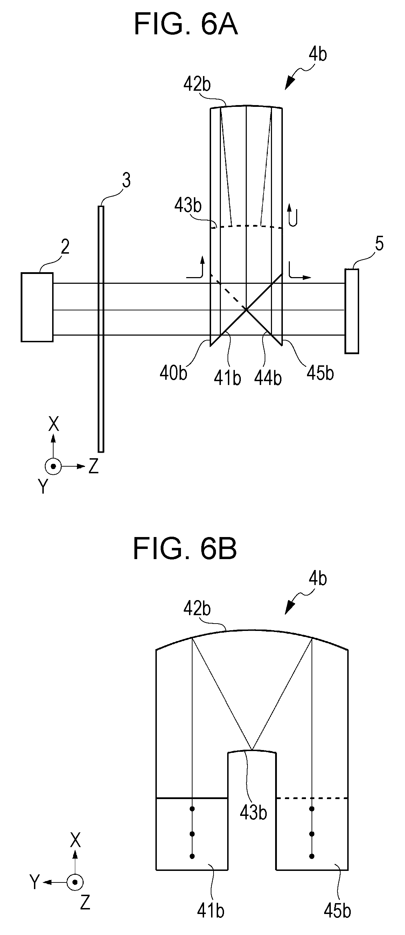

Fig. 5 is a perspective view illustrating the structure of the photoelectric encoder 1b according to the third embodiment of the present invention. Fig. 6A is a schematic diagram illustrating a cross sectional view taken along an X-Z plane of an optical path in the photoelectric encoder according to the third embodiment. Fig. 6B is a schematic diagram illustrating a cross sectional view taken along an X-Y plane of an optical path in the imaging optical element 4b included in the photoelectric encoder according to the third embodiment. The imaging optical element 4b corresponds to an optical system according to the present invention. The imaging optical element 4b is an optical element having an integral structure formed of a transparent material such as glass or plastic. The imaging optical element 4b includes an incident surface 40b, a first planar reflective surface 41b, a main mirror surface 42b, a sub-mirror surface 43b, a second planar reflective surface 44b, and an emission surface 45b. These components form a reflective both-side telecentric optical system having a folded optical path. The main mirror surface 42b and the sub-mirror surface 43b are provided by forming reflective films, and the first planar reflective surface 41b and the second planar reflective surface 44b are provided by forming reflective films or total reflection surfaces. Although not illustrated in Figs. 6A and 6B, the sub-mirror surface 43b may include a mask-processed region, as in the second embodiment.

The imaging optical element 4b is arranged so that the incident surface 40b is perpendicular to the optical axis direction of light incident thereon. In addition, in this example, the imaging optical element 4b is arranged so that the first planar reflective surface 41b bends the optical path of the incident light by 90 degrees toward the positive X-axis direction to reflect the incident light in the positive X-axis direction. The main mirror surface 42b is a spherical concave mirror, and the sub-mirror surface 43b is a spherical convex mirror that has a center that coincides with the center of the main mirror surface 42b. The ratio of the radius Rcc of the spherical surface of the main mirror surface 42b to the radius Rcx of the spherical surface of the sub-mirror surface 43b is generally Rcc:Rcx = n:n-1. In the present embodiment, the ratio is Rcc:Rcx = 2:1. The main mirror surface 42b reflects the light from the first planar reflective surface 41b so that the chief rays of the reflected light extend toward the sub-mirror surface 43b (first reflection by the main mirror surface 42b and the sub-mirror surface 43b). In the present embodiment, the sub-mirror surface 43b is located further in the negative Y-axis direction than the position of the first reflection by the main mirror surface 42b.

Similar to the main mirror surface 42a and the sub-mirror surface 43a according to the second embodiment, the main mirror surface 42b and sub-mirror surface 43b reflect the light 2n-1 times (three times in the present embodiment). The second planar reflective surface 44b reflects light incident thereon, which has been reflected by the main mirror surface 42b for the 2n-1^{th} time, so as to bend the optical path by 90 degrees so that the reflected light travels in the positive Z-axis direction. The light reflected by the second planar reflective surface 44b is emitted through the emission surface 45b as light emitted from the imaging optical element 4b, and is incident on the light receiver 5. At this time, the optical axis of the light emitted from the imaging optical element 4b is offset from the optical axis of the incident light in the Y-axis direction. Thus, the main mirror surface 42b and the sub-mirror surface 43b alternately reflect the light 2n-1 times to fold the optical path in the Y-axis direction. While the reflection is repeated 2n-1 times, the position at which the light is reflected is gradually shifted in the negative Y-axis direction.

The second planar reflective surface 44b reflects the light incident thereon, which has passed through the scale 3 and been reflected by the main mirror surface 42b for the second time, so that the chief rays of the reflected light extend in the positive Z-axis direction. The light reflected by the second planar reflective surface 44b serves as light emitted from the imaging optical element 4a, and is incident on the light receiver 5.

Similar to the second embodiment, the imaging optical element 4b included in the photoelectric encoder 1b according to the third embodiment having the above-described structure constitutes a reflective both-side telecentric optical system in which the reflective surfaces are not exposed. Therefore, the advantage of the both-side telecentric optical system that the image magnification does not vary in accordance with variation in the distance between the scale 3 and the imaging optical element 4b and variation in the distance between the light receiver 5 and the imaging optical element 4b can be obtained. In addition, reduction in the amount of light in a region distant from an optical axis in the field of view can be suppressed. Furthermore, a part of the incident light to be used can be restricted to light in the desired area around the optical axis in accordance with the shape of the reflective region of the sub-mirror surface 43b, and a numerical aperture (NA) of the optical system can substantially be specified. In addition, the optical surfaces are not easily contaminated. Furthermore, since the main mirror, the sub-mirror, and the planar reflective surfaces are integrated with each other, the assembly process can be facilitated. Moreover, since the main mirror surface 42b and the sub-mirror surface 43b fold the optical path in the Y-axis direction, the overall length (length in the Z-axis direction) of the imaging optical system can be reduced compared to that in the second embodiment.

### Fourth Embodiment

A fourth embodiment of the present invention will now be described with reference to the drawings. A photoelectric encoder 1c according to the present embodiment is a two-track photoelectric encoder obtained by combining two photoelectric encoders 1b according to the third embodiment. A light source 2, a scale 3, an imaging optical element 4b, and a light receiver 5 included in each track are similar to those in the above-described third embodiment, and descriptions thereof are thus omitted. The light sources 2, the scales 3, the imaging optical elements 4b, and the light receivers 5 that belong to the respective tracks are distinguished by adding -1 and -2 to the reference numerals.

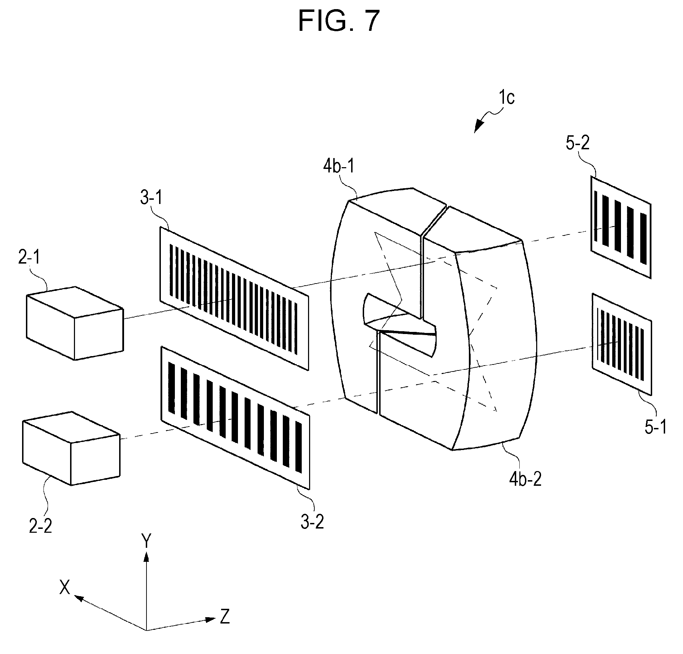

As illustrated in Fig. 7, the two tracks are arranged such that the first planar reflective surface of the imaging optical element 4b-1 included in the first track is adjacent to the second planar reflective surface of the imaging optical element 4b-2 included in the second track, and the second planar reflective surface of the imaging optical element 4b-1 included in the first track is adjacent to the first planar reflective surface of the imaging optical element 4b-2 included in the second track. The first track is above the second track in a region on the light-source side of the imaging optical elements 4b-1 and 4b-2, but is below the second track in a region on the light-receiver side because the vertical positions of the optical paths are inverted by the imaging optical elements 4b-1 and 4b-2.

With the photoelectric encoder 1c according to the fourth embodiment having the above-described structure, the two imaging optical elements 4b are arranged such that the planar reflective surfaces thereof overlap. Therefore, the projection areas on the XY plane and the XZ plane can be reduced and the size of the optical system can be reduced accordingly. In addition, since the structure of each track is the same as that in the third embodiment, effects similar to those of the third embodiment can, of course, be obtained.

### Modification of Embodiments

The present invention is not limited to the above-described embodiments, and modifications, improvements, etc., are included in the present invention as long as the object of the present invention can be achieved.

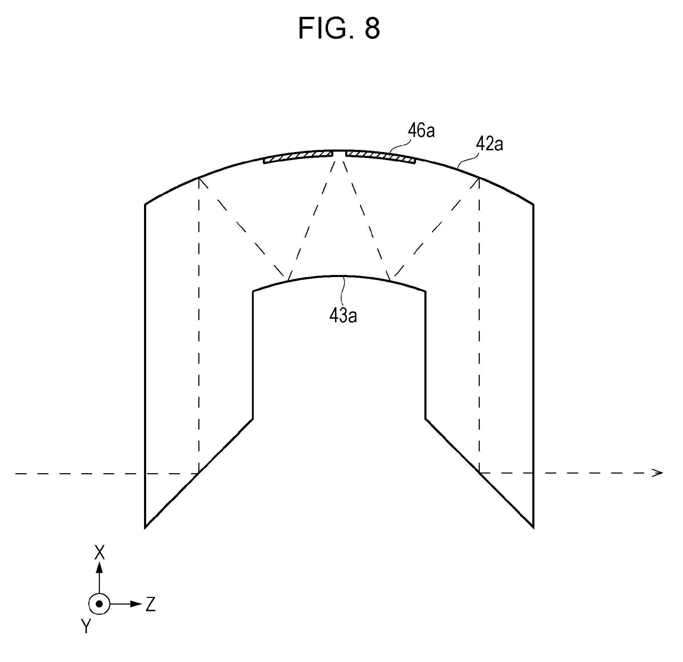

For example, in each of the above-described embodiments, the ratio of the radius Rcc of the spherical surface of the main mirror 42, or the main mirror surface 42a or 42b, to the radius Rcx of the spherical surface of the sub-mirror 43, or the sub-mirror surface 43a or 43b, is Rcc:Rcx = 2:1. However, the radius ratio is not limited to 2:1 as long as the radius ratio is n:n-1. Fig. 8 is a schematic diagram illustrating a cross sectional view taken along an X-Z plane of an optical path in an imaging optical element 4a when the radius ratio is Rcc:Rcx = 3:2 (that is, when n=3). When the radius ratio is n:n-1, the light incident on the imaging optical system is reflected n times by the main mirror and n-1 times by the sub-mirror. The incident light is concentrated at the position of n^{th} reflection in total by the main mirror and sub-mirror, the position of n^{th} reflection being at the center of the optical path. When n is an even number, the incident light is concentrated at the sub-mirror, as in each of the above-described embodiments. When n is an odd number, the incident light is concentrated at the main mirror, as illustrated in Fig. 8. A structure similar to the mask-processed region 46a that restricts a part of the incident light to be used to the light around the optical axis may be provided at the position where the incident light is concentrated. In such a case, similar to an aperture in an optical system including lenses, NA of the optical system can be specified.

As described above, the present invention is suitable for application to a photoelectric encoder.

## Claims

1. A photoelectric encoder (1, 1a, 1b) comprising:
a light source (2) that emits light;
a scale (3) including bars arranged at a predetermined pitch in a length measurement direction, on which the light emitted by the light source (2) is incident;
an imaging optical system (4, 4a, 4b) on which the light that has passed through the scale (3) is incident and which emits the incident light as collimated light; and
a light receiver (5) that receives the light emitted by the imaging optical system (4, 4a, 4b) such that a position of the scale (3) in the length measurement direction can be detected,
wherein the imaging optical system (4, 4a, 4b) constitutes a both-side telecentric optical system including
a first planar reflective surface (41),
a main mirror (42), which is a spherical concave mirror,
a sub-mirror (43), which is a spherical convex mirror and has a center that coincides with a center of the main mirror (42), and
a second planar reflective surface (44),
wherein a ratio of a radius Rcc of a spherical surface of the main mirror (42) to a radius Rcx of a spherical surface of the sub-mirror (43) is Rcc:Rcx = n:n-1, where n is an integer that is greater than or equal to 2, and
wherein, in the imaging optical system (4, 4a, 4b),
the first planar reflective surface (41) reflects the incident light, which has passed through the scale (3), toward the main mirror (42),
the main mirror (42) and the sub-mirror (43) fold an optical path of the light from the first planar reflective surface (41) by reflecting the light from the first planar reflective surface (41) 2n-1 times between the main mirror (42) and the sub-sub-mirror (43),
the main mirror (42) emits the light that has been reflected 2n-1 times toward the second planar reflective surface (44), and
the second planar reflective surface (44) reflects the light that has been reflected 2n-1 times and emitted by the main mirror (42) toward the light receiver (5).

2. The photoelectric encoder according to Claim 1, wherein light-restricting means is provided at a position of n^{th} reflection by the main mirror (42) and the sub-mirror (43), the light-restricting means regulating a part of the incident light to be used to light around an optical axis.

3. The photoelectric encoder according to Claim 2, wherein the integer n that is greater than or equal to 2 is 2, and wherein the light-restricting means regulates the part of the incident light to be used in accordance with a shape of a reflective region of the sub-mirror (43).

4. The photoelectric encoder according to any one of Claims 1 to 3, wherein the imaging optical system (4, 4a, 4b) has an integral structure.

5. The photoelectric encoder according to any one of Claims 1 to 4, wherein the main mirror (42) and the sub-mirror (43) fold the optical path in an optical axis direction of the incident light.

6. The photoelectric encoder according to any one of Claims 1 to 4, wherein the main mirror (42) and the sub-mirror (43) fold the optical path in a direction perpendicular to both an optical axis direction of the incident light and a length measurement direction.

7. A two-track photoelectric encoder (1c) comprising:
first and second photoelectric encoders, each of which is the photoelectric encoder according to Claim 6,
wherein the first planar reflective surface of the first photoelectric encoder (4b-1) and the second planar reflective surface of the second photoelectric encoder (4b-2) at least partially overlap, and the second planar reflective surface of the first photoelectric encoder and the first planar reflective surface of the second photoelectric encoder at least partially overlap.

8. The photoelectric encoder according to any one of Claims 1 to 6, wherein the light emitted by the light source (2) is collimated light.

9. The two-track photoelectric encoder according to Claim 7, wherein the light emitted by each of the light sources (2-1, 2-2) is collimated light.

## Patentansprüche

1. Fotoelektrischer Codierer (1, 1a, 1b), umfassend:
eine Licht emittierende Lichtquelle (2);
eine Skala (3) einschließlich Balken, die mit einer vorbestimmten Teilung in einer Längenmessrichtung angeordnet sind, auf welche das von der Lichtquelle (2) emittierte Licht fällt;
ein optisches Abbildungssystem (4, 4a, 4b), auf welches das Licht fällt, das die Skala (3) durchlaufen hat, und welches das einfallende Licht als kollimiertes Licht emittiert; und
einen Lichtempfänger (5), der das vom optischen Abbildungssystem (4, 4a, 4b) emittierte Licht derart empfängt, dass sich eine Position der Skala (3) in der Längenmessrichtung detektieren lässt,
wobei das optische Abbildungssystem (4, 4a, 4b) ein beidseitiges telezentrisches optisches System konstituiert, das einschießt:
eine erste ebenflächige reflektierende Oberfläche (41),
einen Hauptspiegel (42),
der ein sphärischer konkaver Spiegel ist,
einen Unterspiegel (43),
der ein sphärischer konvexer Spiegel ist und ein Zentrum aufweist, das mit einem Zentrum des Hauptspiegels (42) koinzidiert, und
eine zweite ebenflächige reflektierende Oberfläche (44),
wobei ein Verhältnis von einem Radius Rcc einer sphärischen Oberfläche des Hauptspiegels (42) zu einem Radius Rcx einer sphärischen Oberfläche des Unterspiegels (43) Rcc:Rcx = n:n-1 beträgt, wobei n eine Ganzzahl ist, die größer oder gleich 2 ist, und
wobei, im optischen Abbildungssystem (4, 4a, 4b), die erste ebenflächige reflektierende Oberfläche (41) das einfallende Licht, das die Skala (3) durchlaufen hat, in Richtung des Hauptspiegels (42) reflektiert,
wobei der Hauptspiegel (42) und der Unterspiegel (43) einen Strahlengang des Lichts ab der ersten ebenflächigen reflektierenden Oberfläche (41) durch Reflektieren des Lichts ab der ersten ebenflächigen reflektierenden Oberfläche (41) 2n-1 Male zwischen dem Hauptspiegel (42) und dem Unterspiegel (43) falten,
wobei der Hauptspiegel (42) das 2n-1 Male reflektierte Licht in Richtung der zweiten ebenflächigen reflektierenden Oberfläche (44) emittiert, und
wobei die zweite ebenflächige reflektierende Oberfläche (44) das 2n-1 Male reflektierte und vom Hauptspiegel (42) emittierte Licht in Richtung des Lichtempfängers (5) reflektiert.

2. Fotoelektrischer Codierer nach Anspruch 1, wobei die lichtbegrenzende Einrichtung an einer Position n^{ter} Reflexion durch den Hauptspiegel (42) und den Unterspiegel (43) vorgesehen ist, wobei die lichtbegrenzende Einrichtung einen Teil des einfallenden Lichts reguliert, das zum Beleuchten um eine optische Achse herum verwendet werden soll.

3. Fotoelektrischer Codierer nach Anspruch 2, wobei die Ganzzahl n, die größer als oder gleich 2 ist, 2 ist, und
wobei die lichtbegrenzende Einrichtung den Teil des einfallenden Lichts reguliert, der in Übereinstimmung mit einer Form eines reflektierenden Bereichs des Unterspiegels (43) zu verwenden ist.

4. Fotoelektrischer Codierer nach einem der Ansprüche 1 bis 3, wobei das optische Abbildungssystem (4, 4a, 4b) eine integrale Struktur aufweist.

5. Fotoelektrischer Codierer nach einem der Ansprüche 1 bis 4, wobei der Hauptspiegel (42) und der Unterspiegel (43) den Strahlengang in einer optischen Achsrichtung des einfallenden Lichts falten.

6. Fotoelektrischer Codierer nach einem der Ansprüche 1 bis 4, wobei der Hauptspiegel (42) und der Unterspiegel (43) den Strahlengang in einer Richtung senkrecht zu sowohl einer optischen Achsrichtung des einfallenden Lichts als auch einer Längenmessrichtung falten.

7. Zweispuriger fotoelektrischer Codierer (1c), umfassend: erste und zweite fotoelektrische Codierer, wovon jeder der fotoelektrische Codierer nach Anspruch 6 ist,
wobei sich die erste ebenflächige reflektierende Oberfläche des ersten fotoelektrischen Codierers (4b-1) und die zweite ebenflächige reflektierende Oberfläche des zweiten fotoelektrischen Codierers (4b-2) wenigstens teilweise überlappen, und sich die zweite ebenflächige reflektierende Oberfläche des ersten fotoelektrischen Codierers und die erste ebenflächige reflektierende Oberfläche des zweiten fotoelektrischen Codierers wenigstens teilweise überlappen.

8. Fotoelektrischer Codierer nach einem der Ansprüche 1 bis 6, wobei das von der Lichtquelle (2) emittiertes Licht kollimiertes Licht ist.

9. Zweispuriger fotoelektrischer Codierer nach Anspruch 7, wobei das von jeder der Lichtquellen (2-1, 2-2) emittiertes Licht kollimiertes Licht ist.

## Revendications

1. Codeur photoélectrique (1, 1a, 1 b) comprenant :
une source lumineuse (2) qui émet de la lumière ;
une échelle (3) comprenant des barreaux organisés à un pas prédéterminé dans une direction de mesure de la longueur, sur laquelle la lumière émise par la source lumineuse (2) est incidente ;
un système optique de formation d'image (4, 4a, 4b) sur lequel la lumière qui a traversé l'échelle (3) est incidente et qui émet la lumière incidente sous forme de lumière collimatée ; et
un récepteur de lumière (5) qui reçoit la lumière émise par le système optique de formation d'image (4, 4a, 4b) de sorte qu'une position de l'échelle (3) dans la direction de mesure de la longueur puisse être détectée,
dans lequel le système optique de formation d'image (4, 4a, 4b) constitue un système optique télécentrique des deux côtés comportant
une première surface planaire réfléchissante (41),
un miroir principal (42),
qui est un miroir concave sphérique,
un sous-miroir (43)
qui est un miroir convexe sphérique et qui a un centre qui coïncide avec un centre du miroir principal (42), et
une seconde surface planaire réfléchissante (44),
dans lequel un rapport d'un rayon Rcc d'une surface sphérique du miroir principal (42) à un rayon Rcx d'une surface sphérique du sous-miroir (43)
est Rcc : Rcx = n : n - 1, où n représente un nombre entier qui est supérieur ou égal à 2, et
dans lequel, dans le système optique de formation d'image (4, 4a, 4b),
la première surface planaire réfléchissante (41) réfléchit la lumière incidente, qui a passé par l'échelle (3) dans la direction du miroir principal (42),
le miroir principal (42) et le sous-miroir (43) renvoient un trajet optique de la lumière depuis la première surface planaire réfléchissante (41) en réfléchissant la lumière depuis la première surface planaire réfléchissante (41) 2n-1 fois entre le miroir principal (42) et le sous-miroir (43),
le miroir principal (42) émet la lumière qui a été réfléchie 2n-1 fois vers la surface planaire réfléchissante (44), et
la seconde surface planaire réfléchissante (44) réfléchit la lumière qui a été réfléchie 2n-1 fois et émise par le miroir principal (42) vers le récepteur de lumière (5).

2. Codeur photoélectrique selon la Revendication 1, dans lequel le moyen de restriction de lumière est fourni à une position de n^{ième} réflexion par le miroir principal (42) et par le sous-miroir (43), le moyen de restriction de lumière régulant une partie de la lumière incidente à utiliser pour un éclairage autour d'un axe optique.

3. Codeur photoélectrique selon la Revendication 2, dans lequel le nombre entier n qui est supérieur ou égal à 2 vaut 2, et
dans lequel le moyen de restriction de la lumière régule la partie de la lumière incidente à utiliser conformément à une forme de région réfléchissante du sous-miroir (43).

4. Codeur photoélectrique selon l'une quelconque des revendications 1 à 3, dans lequel le système optique de formation d'image (4, 4a, 4b) possède une structure intégrale.

5. Codeur photoélectrique selon l'une quelconque des revendications 1 à 4, dans lequel le miroir principal (42) et le sous-miroir (43) renvoient le trajet optique dans une direction de l'axe optique de la lumière incidente.

6. Codeur photoélectrique selon l'une quelconque des Revendications 1 à 4, dans lequel le miroir principal (42) et le sous-miroir (43) renvoient le trajet optique dans une direction perpendiculaire à la fois à une direction de l'axe optique de la lumière incidente et à une direction de mesure de la longueur.

7. Codeur photoélectrique à double canal (1 c) comprenant :
des premier et second codeurs photoélectriques, chacun étant le codeur photoélectrique selon la Revendication 6,
dans lequel la première surface planaire réfléchissante du premier codeur photoélectrique (4b-1) et la seconde surface planaire réfléchissante du second codeur photoélectrique (4b-2) se chevauchent au moins partiellement, et la seconde surface planaire réfléchissante du premier codeur photoélectrique et la première surface réfléchissante du second codeur photoélectrique se chevauchent au moins partiellement.

8. Codeur photoélectrique selon l'une quelconque des Revendications 1 à 6, dans lequel la lumière émise par la source lumineuse (2) est une lumière collimatée.

9. Codeur photoélectrique à double canal selon la Revendication 7, dans lequel la lumière émise par chacune des sources lumineuses (2-1, 2-2) est une lumière collimatée.
